# EUROPÄISCHE PATENTSCHRIFT

(11) **EP 2 602 034 B1**
(45) Veröffentlichungstag und Bekanntmachung des Hinweises auf die Patenterteilung: **29.07.2015**
(21) Anmeldenummer: 12006591.7
(22) Anmeldetag: 20.09.2012
(51) Int. Cl.: B21J 15/32

(54) **Blindnietzugdorn-Abtransporteinrichtung**
Blind rivet broken-off mandrel removal device
Dispositif d'évacuation des tiges de rivets aveugles

(30) Priorität: 09.12.2011 DE 102011120605
(43) Veröffentlichungstag der Anmeldung: 12.06.2013
(73) Patentinhaber: GESIPA Blindniettechnik GmbH, 64546 Mörfelden-Walldorf (DE)
(72) Erfinder: Klein, Hubertus, 64546 Mörfelden-Walldorf (DE)
(74) Vertreter: Knoblauch, Andreas

(56) Entgegenhaltungen:
- EP-A2- 0 327 269
- DE-A1- 3 125 838
- US-A- 3 326 496

## Beschreibung

Die Erfindung betrifft eine Blindnietzugdorn-Abtransporteinrichtung mit einem Transportkanal, der eine Eingangsöffnung und mindestens eine Einblasöffnung aufweist und in einem vorbestimmten Abstand stromab der Einblasöffnung mit einem Ausblaspfad verbunden ist.

Beim Setzen eines Blindniets wird der Blindniet durch eine entsprechende Öffnung in einen Gegenstand geführt, bis der so genannte Setzkopf an dem Gegenstand anliegt. Wenn diese Position erreicht ist, wird der Zugdorn des Blindniets aus dem Blindniet herausgezogen. Der Zugdorn bildet dabei auf der anderen Seite des Gegenstandes (oder, wenn mehrere Gegenstände miteinander verbunden werden sollen, auf der anderen Seite des äußersten Gegenstandes) dem so genannten Schließkopf aus. Wenn eine bestimmte Zugkraft erreicht ist, reißt der Zugdorn ab.

Insbesondere bei automatisierten Blindniet-Setzvorgängen muss der Zugdorn dann entsorgt werden, so dass er bei den nächsten Blindniet-Setzvorgängen nicht mehr störend im Weg steht.

Es ist hierzu bekannt, eine Absaugung zu verwenden. Bei einer derartigen Absaugung wird in einer kleinen Entfernung hinter der Eingangsöffnung ein Luftstrom in den Transportkanal hineingeleitet. Dieser Luftstrom hat die Möglichkeit, kurz nach dem Einleiten wieder aus dem Transportkanal herauszutreten. Dadurch ergibt sich ein Unterdruck, der den abgerissenen Zugdorn entlang des Transportkanals beschleunigt. Die Beschleunigung ist in der Regel so groß, dass der Zugdorn eine gewisse Strecke innerhalb des Transportkanals zurücklegen kann. Wenn die Position, zu der der Zugdorn hin entsorgt werden muss, länger ist, dann müssen mehrere derartige Saugeinrichtungen entlang des Transportkanals angeordnet sein. Dies macht das Absaugen der Zugdorne bei größeren Entfernungen umständlich.

Alternative Lösungen sind z.B. aus der DE-A1-3125838 (auf der der Oberbegriff des Anspruchs 1 basiert) oder aus der EP-A2-0 327 269 bekannt.

Der Erfindung liegt die Aufgabe zugrunde, den Abtransport von abgerissenen Zugdornen von Blindnieten zu vereinfachen.

Diese Aufgabe wird bei einer Blindnietzugdorn-Abtransporteinrichtung der eingangs genannten Art dadurch gelöst, dass eine Umschalteinrichtung vorgesehen ist, die zwischen einem Ansaugen eines Zugdorns und einem Blasen des Zugdorns umschaltet.

Der Zugdorn wird also nach wie vor zunächst angesaugt. Hierzu kann die "Saugeinrichtung" in einem Abstand von beispielsweise etwa 30 cm hinter dem Setzwerkzeug angeordnet sein, also hinter der "Nietpistole". Die Saugeinrichtung, mit der oben geschilderten Einblasöffnung ist dann in der Lage, einen Unterdruck zu erzeugen, mit dem der Zugdorn angesaugt werden kann. Sobald der Zugdorn eine gewisse Strecke im Transportkanal zurückgelegt hat, schaltet die Umschaltrichtung auf "Blasen" um. Der Zugdorn wird dann nicht mehr durch Saugluft oder seine eigene Trägheit weiter transportiert, sondern er wird von einem Luftstrom (Luft wird im Folgenden als Beispiel verwendet, es können aber auch andere Gase zum Transport des Zugdorns verwendet werden) weiter transportiert. Mit einem derartigen Blasen lässt sich eine wesentlich bessere Transportleistung erreichen, d.h. der Zugdorn kann über eine längere Strecke mit dem gleichen Aufwand an Luft gefördert werden. Dementsprechend kann man in vielen Fällen Zwischenstationen vermeiden, in denen erneut eine Transportleistung zugeführt werden muss. In vielen Fällen wird die geblasene Luft ausreichen, um den Niet zum Ende des Transportkanals zu blasen, an dem die eigentliche Entsorgung erfolgen kann. Wenn der Transportkanal zu lang ist, kann man natürlich eine weitere Blasstation innerhalb der Länge des Transportkanals vorsehen.

Hierbei ist bevorzugt, dass der Ausblaspfad einen veränderbaren Ausblaswiderstand aufweist. Wenn die Abtransporteinrichtung im Saugbetrieb betrieben wird, dann soll der Ausblaspfad einen möglichst geringen Ausblaswiderstand aufweisen, so dass die Luft leicht aus dem Transportkanal nach außen entweichen kann. In diesem Fall wird nämlich ein relativ hoher Unterdruck erzeugt, der zum Ansaugen des Zugdorns verwendet werden kann. Wenn der Ausblaswiderstand dann gedrosselt wird, wird - je nach Drosselwiderstand - ein Teil oder sogar die gesamte in den Transportkanal eingeblasene Luft dazu verwendet, den Zugdorn durch Blasen weiter zu transportieren. Die Transportgeschwindigkeit und auch die Transportweite lässt sich durch den Ausblaswiderstand in gewissen Grenzen steuern.

Vorzugsweise ist der Ausblaspfad durch ein Ventilelement verschließbar. Wenn der Ausblaspfad verschlossen ist, dann kann keine Luft mehr durch den Ausblaspfad entweichen. Vielmehr muss die gesamte Luft durch den Transportkanal strömen und kann dabei den Zugdorn mitnehmen.

Hierbei ist bevorzugt, dass der Transportkanal über eine Ausblasöffnung mit dem Ausblaspfad verbunden ist und das Ventilelement die Ausblasöffnung verschließt. Dies ist eine mechanisch relativ einfache Ausgestaltung. Man muss in diesem Fall den Ausblaspfad nicht in ein geschlossenes Rohrsystem führen, sondern kann mehr oder weniger beliebige Ausgestaltungen wählen. Gleichwohl steht eine definierte Position zur Verfügung, an der der Ausblaspfad unterbrochen werden kann.

Vorzugsweise ist das Ventilelement parallel zu einer Strömungsrichtung durch den Transportkanal verlagerbar. Das Ventilelement ist also als Schieber ausgebildet. Ein derartiger Schieber lässt sich leicht bewegen. Die Bewegungsrichtung ist dabei etwa senkrecht zu der Ausblasrichtung der Luft aus dem Transportkanal gerichtet, so dass sich sowohl das Schließen als auch das Öffnen unter dem gleichen Druckverhältnis durchführen lässt.

Hierbei ist bevorzugt, dass das Ventilelement den Transportkanal ringförmig umgibt. Der Transportkanal dient dann als Halterung für das Ventilelement. Das Ventilelement ist einfach als Ring ausgebildet, der auf den Transportkanal außen aufgeschoben ist. Wenn der Transportkanal einen kreisrunden Außenumfang hat, dann kann auch das Ventilelement eine kreisringförmige Öffnung aufweisen. Die Toleranzen können klein gehalten werden. Ein absolut dichtes Verschließen des Ausblaspfades ist in der Regel nicht erforderlich. Kleinere Leckagen sind durchaus erlaubt.

Vorzugsweise weist der Transportkanal stromauf der Einblasöffnung ein Drosselventil auf. Dieses Drosselventil verbessert den Effekt des Aufblasens weiter. Das Drosselventil verhindert, dass die in den Transportkanal eingeblasene Luft sozusagen "rückwärts" aus dem Transportkanal entweicht. Der Transportkanal wird also zwischen der Eingangsöffnung, durch die der Zugdorn eintritt, und der Einblasöffnung, durch die die Förderluft eintritt, unterbrochen. Auch hier muss der Verschluss nicht absolut dicht sein. Der Strömungswiderstand muss nur so weit erhöht werden, dass keine nennenswerten Luftströme mehr entweichen können.

Vorzugsweise ist eine Steuereinrichtung vorgesehen, die das Ventilelement betätigt. Diese Steuereinrichtung kann dann auf verschiedene Weise arbeiten. Im Grunde ist nur ein gesteuerter Antrieb notwendig. Die Steuereinrichtung kann natürlich auch das Drosselventil betätigen.

Hierbei ist bevorzugt, dass die Steuereinrichtung mit einem Sensor verbunden ist, der einen Durchgang eines Zugdorns erfasst. In diesem Fall wird das Ventilelement und gegebenenfalls auch die Drosseleinrichtung immer dann betätigt, wenn ein Zugdorn am Sensor vorbeigelaufen ist. Die Position des Sensors kann dabei in weiten Grenzen frei gewählt werden, wenn man zusätzlich die Bewegungsgeschwindigkeit des Zugdorns in Betracht zieht. Im Grunde ist jede Position stromab der Einblasöffnung möglich, die nicht allzu weit von der Ausblasöffnung entfernt ist. Vorzugsweise ist der Sensor stromab kurz hinter der Ausblasöffnung angeordnet.

In einer alternativen Ausgestaltung kann vorgesehen sein, dass die Steuereinrichtung mit einer Steuerung eines Blindnietsetzgeräts verbunden ist. Die Steuereinrichtung "weiß" dann, wann ein Setzvorgang erfolgt ist und wann dementsprechend auch ein Zugdorn zu erwarten ist. Die Steuereinrichtung kann dann eine vorbestimmte Zeit nach dem Setzvorgang, die ausreicht, um den Zugdorn bis über die Einblasöffnung hinaus zu saugen, warten, bevor das Ventilelement den Ausblaspfad verschließt oder drosselt.

Vorzugsweise ist der Transportkanal in einer Kammer eines Gehäuses angeordnet, die mit einem Druckgasanschluss verbunden ist. Dies ist eine einfache Möglichkeit, um das Druckgas, insbesondere Luft, in den Transportkanal einzuleiten. Der Transportkanal weist zu diesem Zweck in Umfangsrichtung verteilt mehrere Einblasöffnungen auf, die dafür sorgen, dass der Zugdorn nicht einseitig an eine Innenwand des Transportkanals gedrückt wird. Die Verteilung des Druckgases erfolgt dabei in der Kammer des Gehäuses.

Vorzugsweise schließt die Einblasöffnung mit einer Mittelachse des Transportkanals im Bereich der Einblasöffnung einen spitzen Winkel ein. Damit bekommt die Luft, die in den Transportkanal eingeblasen wird, gleich die "richtige" Richtung zum Ausgang des Transportkanals hin. Die Saugwirkung und auch die Blaswirkung werden dabei weiter verbessert.

Die Erfindung wird im Folgenden anhand eines bevorzugten Ausführungsbeispiels in Verbindung mit einer Zeichnung beschrieben. Hierin zeigen:
- Fig. 1: eine schematische Darstellung einer Blindnietzugdorn-Abtransporteinrichtung im Saugbetrieb und
- Fig. 2: die Einrichtung im Blasbetrieb.

Eine Blindnietzugdorn-Abtransporteinrichtung 1 weist einen Transportkanal 2 auf, der beispielsweise innerhalb eines Rohres 3 ausgebildet ist. Der Transportkanal 2 weist eine Eingangsöffnung 4 auf, durch die ein Zugdorn 5 eines nicht näher dargestellten Blindniets in den Transportkanal 2 eintreten kann. Der Eingang kann beispielsweise mit einem Entsorgungsausgang eines Blindnietsetzgeräts verbunden werden.

Das Rohr 3 ist in einem Gehäuse 6 angeordnet. Das Gehäuse weist eine erste Kammer 7 auf, die mit einem Druckgasanschluss 8 verbunden ist. Ferner weist das Gehäuse eine zweite Kammer 9 auf, die mit einem Auslass 10 verbunden ist.

Das Rohr 3 weist im Bereich der ersten Kammer 7 mehrere in Umfangsrichtung gleichmäßig verteilte Einblasöffnungen 11 auf, die mit einer Mittelachse des Transportkanals 2 ebenfalls im Bereich der Einblasöffnungen einen spitzen Winkel einschließen. Wenn nun Luft durch den Druckgasanschluss 8 in die erste Kammer 7 eingeblasen wird, dann strömt diese Luft, durch Pfeile 12 symbolisiert, unter diesem Winkel in den Transportkanal 2 hinein und bildet dort eine durch Pfeile 13 symbolisierte Strömung, die von der Eingangsöffnung 4 weg gerichtet ist. Diese Strömung saugt den Zugdorn 5 an, wie durch Pfeile 14 symbolisiert ist.

Damit die Luftströmung eine entsprechende Saugwirkung entfalten kann, ist es wichtig, dass die Strömung keinem größeren Strömungswiderstand gegenüber steht. Ein derartiger Strömungswiderstand könnte beispielsweise durch eine Luftmenge gebildet sein, die im Transportkanal 2 ansteht. Aus diesem Grunde sind im Rohr 3 stromab der Einblasöffnungen 11 mehrere Ausblasöffnungen 15 vorgesehen, die in die zweite Kammer 9 münden. Die zweite Kammer 9 kann die durch die Ausblasöffnungen 15 eintretende Luft durch den Auslass 10, der nicht verschlossen ist, ablassen. Die Ausblasöffnungen 15 bilden zusammen mit der Kammer 9 und dem Auslass 10 einen Ausblaspfad.

Durch das Ansaugen mit Hilfe der Luftströmung wird der Zugdorn 5 auf eine gewisse Geschwindigkeit beschleunigt. Aufgrund seiner Massenträgheit kann sich der Zugdorn 5 dann noch über eine gewisse Strecke im Transportkanal 2 bewegen. Da der Zugdorn 5 bei dieser Bewegung aber keinem weiteren Antrieb mehr ausgesetzt ist und eine Reibung zwischen dem Zugdorn 5 und dem Rohr 3 unvermeidlich ist, ist die Strecke, die der Zugdorn 5 im Transportkanal 2 noch zurücklegen kann, begrenzt. Nach einer gewissen Strecke von beispielsweise 1 bis 3 m ist eine erneute Saugeinrichtung erforderlich. Dies macht den Abtransport der Zugdorne 5 relativ aufwändig.

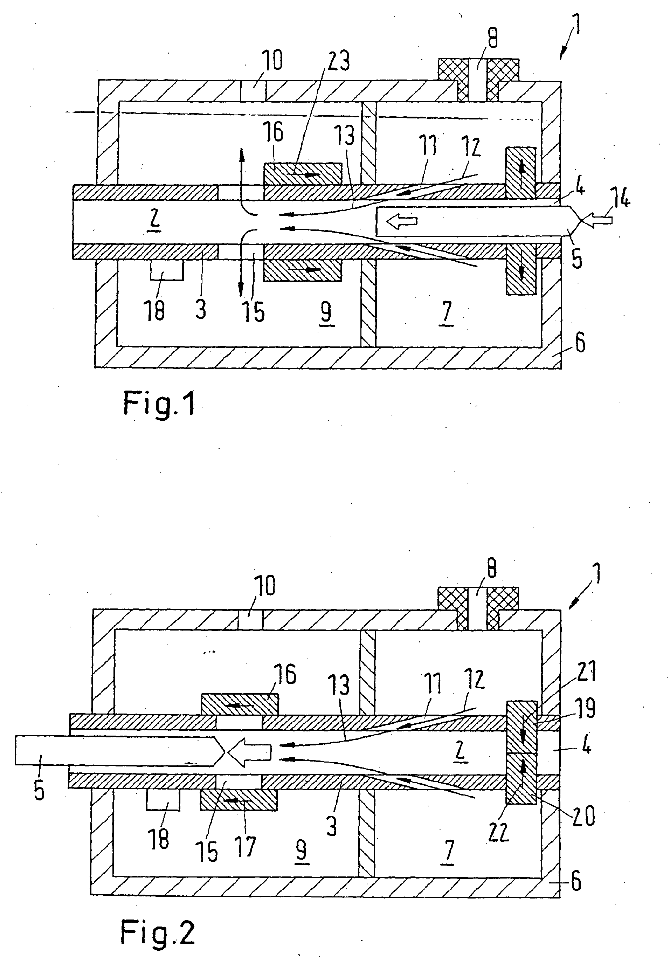

Fig. 2 zeigt eine Möglichkeit, diesen Abtransport auf andere Weise zu gestalten. Gleiche Elemente sind mit den gleichen Bezugszeichen wie in Fig. 1 versehen.

Zunächst einmal ist ein Ventilelement 16 vorgesehen, das das Rohr 3 ringförmig umgibt und in Richtung eines Pfeils 17 parallel zur Längserstreckung des Rohres 3 verlagert werden kann. Ein für die Bewegung notwendiger Antrieb ist aus Gründen der Übersicht nicht dargestellt. Ebenfalls nicht dargestellt ist eine Steuereinrichtung, die den Antrieb betätigt.

Wenn das Ventilelement 16 aus der in Fig. 1 dargestellten Position in die in Fig. 2 dargestellte Position bewegt worden ist, dann sind die Ausblasöffnungen 15 in der Wand des Rohres 3 verschlossen und somit auch der Ausblaspfad durch die zweite Kammer 9 und den Auslass 10. Die durch die Einblasöffnungen 11 eingeblasene Luft treibt nun den Zugdorn 5 vor sich her und bläst ihn durch den Transportkanal 2. Der Zugdorn 5 ist also über einen wesentlich größeren Teil seiner Bewegung einer zusätzlichen Antriebskraft unterworfen, nämlich dem Druck, der durch den Luftstrom 13 aufgebracht wird, so dass er auch wesentlich größere Strecken zurücklegen kann. In vielen Fällen reicht die Antriebskraft durch den Luftstrom 13 aus, um den Zugdorn 5 über 5 bis 10 m zu der gewünschten Entsorgungsstelle zu transportieren.

Um die Bewegung des Ventilelements 16 zu steuern, kann ein Sensor 18 am Rohr 3 vorgesehen sein. Der Sensor 18 erfasst den Durchgang des Zugdornes 5. Sobald der Sensor festgestellt hat, dass der Zugdorn 5 an ihm vorbeiläuft, löst er das Verschieben des Ventilelements 16 aus und damit das Verschließen des Ausblaspfades.

Der Sensor 18 kann natürlich auch an einer anderen Position angeordnet sein. Wenn er stromauf der dargestellten Position angeordnet ist, dann muss man die Bewegungsgeschwindigkeit des Zugdorns im Transportkanal 2 noch berücksichtigen, um das Verschließen des Ausblaspfades zum richtigen Zeitpunkt zu bewirken.

Alternativ dazu kann die Steuereinrichtung auch mit der Steuerung eines Blindnietgeräts verbunden sein. Eine vorbestimmte Zeit nach dem Setzen eines Blindniets kann man die Ausblasöffnung 15 verschließen, um das Blasen des Zugdorns 5 zu bewirken.

Eine zusätzliche Maßnahme, um das Ausblasen weiter zu verbessern, besteht darin, ein Drosselventil zu betätigen, das den Transportkanal 2 zwischen den Einblasöffnungen 11 und der Eingangsöffnung 4 verschließt. Das Drosselventil ist hier schematisch durch zwei Platten 19, 20 dargestellt, die in Richtung von Pfeilen 21, 22 radial aufeinander zu bewegt werden können. Wenn die beiden Platten 19, 20 aneinander anliegen, wie in Fig. 2 dargestellt, dann ist ein Austritt von Luft durch die Eingangsöffnung 4 praktisch ausgeschlossen. Kleiner Leckagen sind aber durchaus zulässig.

Wenn der Zugdorn 5 weit genug transportiert worden ist, was sich beispielsweise durch Abwarten einer vorbestimmten Zeitspanne sicherstellen lässt, dann wird das Ventilelement 16 in Richtung eines Pfeils 23 bewegt, also entgegengesetzt zu der Richtung des Pfeils 17, so dass die Ausblasöffnung 15 wieder frei gegeben wird. Gleichzeitig wird das Drosselventil mit den Platten 19, 20 geöffnet, so dass auch die Eingangsöffnung 4 wieder frei ist und der Transportkanal 2 für ein erneutes Ansaugen eines Zugdorns 5 zur Verfügung steht.

## Patentansprüche

1. Blindnietzugdorn-Abtransporteinrichtung (1) mit einem Transportkanal (2), der eine Eingangsöffnung (4) und mindestens eine Einblasöffnung (11) aufweist und in einem vorbestimmten Abstand stromab der Einblasöffnung (11) mit einem Ausblaspfad (15, 9, 10) verbunden ist, **dadurch gekennzeichnet, dass** eine Umschalteinrichtung vorgesehen ist, die zwischen einem Ansaugen eines Zugdorns (5) und einem Blasen des Zugdorns (5) umschaltet.

2. Blindnietzugdorn-Abtransporteinrichtung nach Anspruch 1, **dadurch gekennzeichnet, dass** der Ausblaspfad (15, 9, 10) einen veränderbaren Ausblaswiderstand aufweist.

3. Blindnietzugdorn-Abtransporteinrichtung nach Anspruch 2, **dadurch gekennzeichnet, dass** der Ausblaspfad (15, 9, 10) durch ein Ventilelement (16) verschließbar ist.

4. Blindnietzugdorn-Abtransporteinrichtung nach Anspruch 3, **dadurch gekennzeichnet, dass** der Transportkanal (2) über eine Ausblasöffnung (15) mit dem Ausblaspfad (15, 9, 10) verbunden ist und das Ventilelement (16) die Ausblasöffnung (15) verschließt.

5. Blindnietzugdorn-Abtransporteinrichtung nach Anspruch 3 oder 4, **dadurch gekennzeichnet, dass** das Ventilelement (16) parallel zu einer Strömungsrichtung durch den Transportkanal (2) verlagerbar ist.

6. Blindnietzugdorn-Abtransporteinrichtung nach Anspruch 5, **dadurch gekennzeichnet, dass** das Ventilelement (16) den Transportkanal (2) ringförmig umgibt.

7. Blindnietzugdorn-Abtransporteinrichtung nach einem der Ansprüche 1 bis 6, **dadurch gekennzeichnet, dass** der Transportkanal (2) stromauf der Einblasöffnung ein Drosselventil (19, 20) aufweist.

8. Blindnietzugdorn-Abtransporteinrichtung nach einem der Ansprüche 1 bis 7, **dadurch gekennzeichnet, dass** eine Steuereinrichtung vorgesehen ist, die das Ventilelement (16) betätigt.

9. Blindnietzugdorn-Abtransporteinrichtung nach Anspruch 8, **dadurch gekennzeichnet, dass** die Steuereinrichtung mit einem Sensor (18) verbunden ist, der einen Durchgang eines Zugdorns (5) erfasst.

10. Blindnietzugdorn-Abtransporteinrichtung nach Anspruch 8, **dadurch gekennzeichnet, dass** die Steuereinrichtung mit einer Steuerung eines Blindnietsetzgeräts verbunden ist.

11. Blindnietzugdorn-Abtransporteinrichtung nach einem der Ansprüche 1 bis 10, **dadurch gekennzeichnet, dass** der Transportkanal (2) in einer Kammer (7) eines Gehäuses (2) angeordnet ist, die mit einem Druckgasanschluss (8) verbunden ist.

12. Blindnietzugdorn-Abtransporteinrichtung nach einem der Ansprüche 1 bis 11, **dadurch gekennzeichnet, dass** die Einblasöffnung (11) mit einer Mittelachse des Transportkanals (2) im Bereich der Einblasöffnung (11) einen spitzen Winkel einschließt.

## Claims

1. Blind rivet drawing mandrel removal device (1) comprising a transport channel (2) having an inlet opening (4) and at least one blow-in opening (11) and being connected at a predetermined distance downstream of the blow-in opening (11) to a blow-out path (15, 9, 10), **characterized in that** a switchover device is provided switching over between a suctioning of a drawing mandrel (5) and a blowing of the drawing mandrel (5).

2. Blind rivet drawing mandrel removal device according to claim 1, **characterized in that** the blow-out path (15, 9, 10) has a changeable blow-out resistance.

3. Blind rivet drawing mandrel removal device according to claim 2, **characterized in that** the blow-out path (15, 9, 10) is closable by a valve element (16).

4. Blind rivet drawing mandrel removal device according to claim 3, **characterized in that** the transport channel (2) is connected to the blow-out path (15, 9, 10) via a blow-out opening (15) and the valve element (16) closes the blow-out opening (15).

5. Blind rivet drawing mandrel removal device according to claim 3 or 4, **characterized in that** the valve element (16) is displaceable parallel to a flow direction through the transport channel (2).

6. Blind rivet drawing mandrel removal device according to claim 5, **characterized in that** the valve element (16) surrounds the transport channel (2) in an annular manner.

7. Blind rivet drawing mandrel removal device according to any of claims 1 to 6, **characterized in that** the transport channel (2) comprises a throttle valve (19, 20) arranged upstream of the blow-in opening.

8. Blind rivet drawing mandrel removal device according to any of claims 1 to 7, **characterized in that** a control device is provided actuating the valve element (16).

9. Blind rivet drawing mandrel removal device according to claim 8, **characterized in that** the control device is coupled to a sensor (18) detecting a passage of a drawing mandrel (5).

10. Blind rivet drawing mandrel removal device according to claim 8, **characterized in that** the control device is connected to a control of a blind rivet setting device.

11. Blind rivet drawing mandrel removal device according to any of claims 1 to 10, **characterized in that** the transport channel (2) is arranged in a chamber (7) of a housing (6) wherein a compressed gas connection (8) is connected to the chamber (7).

12. Blind rivet drawing mandrel removal device according to any of claims 1 to 11, **characterized in that** the blow-in opening (11) is oriented at an acute angle to a center axis of the transport channel (2).

## Revendications

1. Dispositif d'évacuation des tiges de traction de rivets aveugles (1) avec un canal de transport (2) qui présente une ouverture d'entrée (4) et au moins une ouverture d'insufflation (11) et est relié à une distance prédéterminée en aval de l'ouverture d'insufflation (11) à une voie de soufflage (15, 9, 10), **caractérisé en ce qu'**un dispositif de commutation est prévu, lequel commute entre une aspiration d'une tige de traction (5) et un soufflage de la tige (5).

2. Dispositif d'évacuation des tiges de traction de rivets aveugles selon la revendication 1, **caractérisé en ce que** la voie de soufflage (15, 9, 10) présente une résistance au soufflage modifiable.

3. Dispositif d'évacuation des tiges de traction de rivets aveugles selon la revendication 2, **caractérisé en ce que** la voie de soufflage (15, 9, 10) peut être fermée par un élément de soupape (16).

4. Dispositif d'évacuation des tiges de traction de rivets aveugles selon la revendication 3, **caractérisé en ce que** le canal de transport (2) est relié par une ouverture de soufflage (15) à la voie de soufflage (15, 9, 10) et l'élément de soupape (16) ferme l'ouverture de soufflage (15).

5. Dispositif d'évacuation des tiges de traction de rivets aveugles selon la revendication 3 ou 4, **caractérisé en ce que** l'élément de soupape (16) peut être déplacé parallèlement à un sens de passage dans le canal de transport (2).

6. Dispositif d'évacuation des tiges de traction de rivets aveugles selon la revendication 5, **caractérisé en ce que** l'élément de soupape (16) entoure de manière annulaire le canal de transport (2).

7. Dispositif d'évacuation des tiges de traction de rivets aveugles selon l'une quelconque des revendications 1 à 6, **caractérisé en ce que** le canal de transport (2) présente, en amont de l'ouverture d'insufflation, une soupape d'étranglement (19, 20).

8. Dispositif d'évacuation des tiges de traction de rivets aveugles selon l'une quelconque des revendications 1 à 7, **caractérisé en ce qu'**un dispositif de commande est prévu, lequel actionne l'élément de soupape (16).

9. Dispositif d'évacuation des tiges de traction de rivets aveugles selon la revendication 8, **caractérisé en ce que** le dispositif de commande est relié à un capteur (18) qui détecte un passage d'une tige de traction (5).

10. Dispositif d'évacuation des tiges de traction de rivets aveugles selon la revendication 8, **caractérisé en ce que** le dispositif de commande est relié à une commande d'un appareil de placement de rivet aveugle.

11. Dispositif d'évacuation des tiges de traction de rivets aveugles selon l'une quelconque des revendications 1 à 10, **caractérisé en ce que** le canal de transport (2) est agencé dans une chambre (7) d'un boîtier (2) qui est reliée à un raccord de gaz comprimé (8).

12. Dispositif d'évacuation des tiges de traction de rivets aveugles selon l'une quelconque des revendications 1 à 11, **caractérisé en ce que** l'ouverture d'insufflation (11) forme un angle aigu avec un axe médian du canal de transport (2) dans la zone de l'ouverture d'insufflation (11).
